# EUROPEAN PATENT APPLICATION

(11) **EP 4 357 939 A1**
(43) Date of publication of application: **24.04.2024**
(21) Application number: 22940512.1
(22) Date of filing: 20.12.2022
(51) Int. Cl.: G06F 16/51

(54) **PICTURE PROCESSING METHOD AND SYSTEM BASED ON PICTURE-TEXT COMBINATION, AND READABLE STORAGE MEDIUM**

(30) Priority: 07.09.2022 CN 202211091963
(71) Applicant: Shenzhen SDMC Technology Co., Ltd., Shenzhen, Guandong 518057 (CN)
(72) Inventor: The designation of the inventor has not yet been filed
(74) Representative: Zaboliene, Reda
(86) International application number: PCT/CN2022/140477
(87) International publication number: WO 2024/051029

(57) **Abstract**

Provided are a method, a system and a readable storage medium for image processing based on the image-text combination, where the method includes: adding image metadata based on a preset deep learning network to obtain an image-text database, and processing of the image metadata further includes: acquiring actively edited data in a preset editing area of the image metadata to perform encryption and/or read-only protection, and storing the actively edited data; supplementing a preset model to perform adversarial learning on the image metadata through connection between a web crawler and a public semantic database, so as to improve semantic description and image feature expression; and acquiring user retrieval keywords, performing retrieval to acquire images required by a user by using the retrieval keywords based on the image-text database, and outputting the images to the user. The invention can process deeper retrieval of videos and images, and solve computational problems of generation of mass data and retrieval by many users, helping the users check content of the corresponding image files.

## Description

### BACKGROUND OF THE INVENTION

### 1. Technical Field

The invention relates to the technical field of data processing, and more particularly, to a method, a system and a readable storage medium for image processing based on the image-text combination.

### 2. Description of Related Art

In recent years, everyone is in possession of a large amount of data due to the development of mobile terminal business with functions of short videos and image-text multimedia, making them unable to search personal pictures and videos conveniently. Moreover, many people have limited ability to express in texts, and their memories mainly depend on visualized content, because images and videos can be used in a more convenient way. The existing search engines are available for search chiefly based on the texts, but meanwhile, smart phones have more and more functions, but anyway, they are only used as control devices, and are not very useful for improving the production efficiency of people in recording and retrieval, they make retrieval chiefly depending on public data on the internet, and may not necessarily have excellent performance in specific functions.

Meanwhile, as a general-purpose device, the smart phones are unable to provide computing power and software support for the corresponding special-purpose devices. Therefore, it is necessary to fully exploit search functions of the smart phones and computers to improve user experience.

### BRIEF SUMMARY OF THE INVENTION

An objective of the invention is to provide a method, a system and a readable storage medium for image processing based on the image-text combination, so as to process deeper retrieval of videos and images, and solve computational problems of generation of mass data and retrieval by many users, helping the users check content of the corresponding image files.

A first aspect of the invention provides a method for image processing based on the image-text combination, including the following steps:
adding image metadata based on a preset deep learning network to obtain an image-text database, where processing of the image metadata further includes:
acquiring actively edited data in a preset editing area of the image metadata to perform encryption and/or read-only protection, and storing the actively edited data;
supplementing a preset model to perform adversarial learning on the image metadata through connection between a web crawler and a public semantic database, so as to improve semantic description and image feature expression; and
acquiring user retrieval keywords, performing retrieval to acquire images required by a user by using the retrieval keywords based on the image-text database, and outputting the images to the user.

In this solution, the image-text database is obtained by adding image metadata based on the preset deep learning network, specifically including:
performing deep learning on the image based on the preset deep learning network, and acquiring a target data segment and an image optical feature vector database by combining the image metadata, where the target data segment includes image scene description, plot description and action semantics described in characters; and
obtaining the image-text database based on the target data segment and the image optical feature vector database, and establishing mapping relation of an image format.

In this solution, the actively edited data in the preset editing area of the image metadata are acquired to perform encryption and/or read-only protection, and the active edited data are stored, specifically including:
acquiring the actively edited data based on the preset editing area corresponding to the image metadata, where the actively edited data is manually edited in advance and filled in the corresponding preset editing area; and
supplementing the semantic description and image feature expression, and performing encryption and/or read-only protection on the actively edited data, where the storage mode includes cloud offline download and/or local download.

In this solution, the preset model is supplemented to perform adversarial learning on the image metadata through connection between the web crawler and the public semantic database, so as to improve semantic description and image feature expression, specifically including:
supplementing a preset model to perform adversarial learning on the image metadata through connection between a web crawler and a public semantic database, so as to improve semantic description and image feature expression; and
improving the semantic description and the image feature expression according to the weight ratio after the adversarial learning, and associating a reference mark with the image metadata when a similarity index appears.

In this solution, the method further includes obtaining an image-text database from video data, specifically including:
acquiring semantic data in a video based on the video data, where the semantic data includes self-contained semantics and emotion semantics;
collecting the information of semantic description from associated webpages and bullet screens when the video data is a video on a public website; and
acquiring image-text data corresponding to key frames of the video based on key frames of each video in combination with the information of semantic description to obtain the image-text database, where the image-text data includes text and images corresponding to the key frames of the video.

In this solution, the method further includes: performing multimedia reading by using a preset reading device on the image-text data acquired from a video file.

A second aspect of the invention further provides a system for image processing based on the image-text combination, including a memory and a processor, where the memory includes a program of a method for image processing based on the image-text combination, and when being executed by the processor, the program of a method implements the following steps:
adding image metadata based on a preset deep learning network to obtain an image-text database, where processing of the image metadata further includes:
acquiring actively edited data in a preset editing area of the image metadata to perform encryption and/or read-only protection, and storing the actively edited data;
supplementing a preset model to perform adversarial learning on the image metadata through connection between a web crawler and a public semantic database, so as to improve semantic description and image feature expression; and
acquiring user retrieval keywords, performing retrieval to acquire images required by a user by using the retrieval keywords based on the image-text database, and outputting the images to the user.

In this solution, the image-text database is obtained by adding image metadata based on the preset deep learning network, specifically including:
performing deep learning on the image based on the preset deep learning network, and acquiring a target data segment and an image optical feature vector database by combining the image metadata, where the target data segment includes image scene description, plot description and action semantics described in characters; and
obtaining the image-text database based on the target data segment and the image optical feature vector database, and establishing mapping relationship of an image format.

In this solution, the actively edited data in the preset editing area of the image metadata are acquired to perform encryption and/or read-only protection, and the active edited data are stored, specifically including:
acquiring the actively edited data based on the preset editing area corresponding to the image metadata, where the actively edited data is manually edited in advance and filled in the corresponding preset editing area; and
supplementing the semantic description and image feature expression, and performing encryption and/or read-only protection on the actively edited data, where the storage mode includes cloud offline download and/or local download.

In this solution, the preset model is supplemented to perform adversarial learning on the image metadata through connection between the web crawler and the public semantic database, so as to improve semantic description and image feature expression, specifically including:
supplementing a preset model to perform adversarial learning on the image metadata through connection between a web crawler and a public semantic database, so as to improve semantic description and image feature expression; and
improving the semantic description and the image feature expression according to the weight ratio after the adversarial learning, and associating a reference mark with the image metadata when a similarity index appears.

In this solution, the method further includes obtaining an image-text database from video data, specifically including:
acquiring semantic data in a video based on the video data, where the semantic data includes self-contained semantics and emotion semantics;
collecting the information of semantic description from associated webpages and bullet screens when the video data is a video on a public website; and
acquiring image-text data corresponding to key frames of the video based on key frames of each video in combination with the information of semantic description to obtain the image-text database, where the image-text data includes text and images corresponding to the key frames of the video.

In this solution, the method further includes: performing multimedia reading by using a preset reading device on the image-text data acquired from a video file.

A third aspect of the invention provides a computer-readable storage medium, where the computer-readable storage medium includes program of a method for image processing based on the image-text combination, and when being executed by the processor, the program of a method implements the steps of the method for image processing based on the image-text combination as described in any one of the above.

A method, a system and a readable storage medium for image processing based on the image-text combination disclosed in the invention can process deeper retrieval of videos and images, and solve computational problems of generation of mass data and retrieval by many users, helping the users check content of the corresponding image files; further, the invention gives full play to deep learning functions of each smart device and cloud computing, simultaneously downloads a new data format through adaptation and conversion to the local, previews a summary information file and sends to an old storage device, and enables the storage device to work independently after the collaboration is finished, so that the images can be retrieved by conventional search engines or small text search engines, thereby featuring strong adaptability.

### BRIEF DESCRIPTION OF THE SEVERAL VIEWS OF THE DRAWINGS

Fig. 1 shows a flow chart of a method for image processing based on the image-text combination according to the invention.
Fig. 2 shows a flow chart of a method for image processing based on the image-text combination according to the invention.
Fig. 3 is a block diagram of a system for image processing based on the image-text combination according to the invention.

### DETAILED DESCRIPTION OF THE INVENTION

In order to make the above objectives, features and advantages of the invention clearer and more comprehensible, the invention will be further described below in detail in conjunction with accompanying drawings and particular embodiments. It should be noted that the embodiments in the invention and features in the embodiments can be combined with each other, so long as they are not in conflict with each other.

Many specific details are set forth in the following description for thorough understanding of the invention. However, the invention can also be implemented in other ways than those described herein. Therefore, the scope of protection of the invention is not limited by the specific embodiments disclosed below.

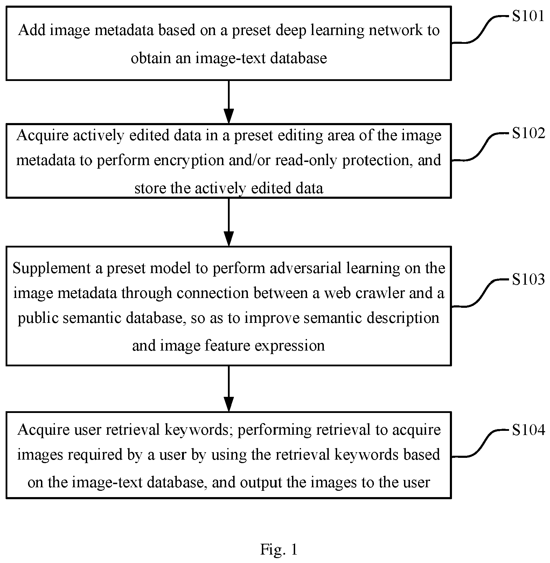

Fig. 1 shows a flow chart of a method for image processing based on the image-text combination according to the invention.

As shown in Fig. 1, the invention discloses a method for image processing based on the image-text combination, including the following steps:
S101, adding image metadata based on a preset deep learning network to obtain an image-text database, where processing of the image metadata further includes:
S102, acquiring actively edited data in a preset editing area of the image metadata to perform encryption and/or read-only protection, and storing the actively edited data;
S103, supplementing a preset model to perform adversarial learning on the image metadata through connection between a web crawler and a public semantic database, so as to improve semantic description and image feature expression; and
S104, acquiring user retrieval keywords, performing retrieval to acquire images required by a user by using the retrieval keywords based on the image-text database, and outputting the images to the user.

It should be noted that, in this embodiment, when performing deep learning on an image based on the preset deep learning network, the image metadata are added to obtain the image-text database, where the added image metadata need to be processed in advance, and the processing method includes: acquiring actively edited data in a preset editing area of the image metadata to perform encryption and/or read-only protection , storing the actively edited data and supplementing a preset model to perform adversarial learning on the image metadata through connection between a web crawler and a public semantic database, so as to improve semantic description and image feature expression.

Further, two steps are utilized in the process of processing the image metadata, where the first step is manual editing and modification, and the semantic description and image feature expression are supplemented by acquiring the manually modified actively edited data; and the second step is automatic generation of deep learning, which supplements emotion semantics, action semantics, still life semantics, and the like, and makes the image feature expression by collecting webpage information or data of similar images in a public domain through the web crawler, the user retrieval keywords are acquired after the text-image database is acquired, the retrieval is performed to acquire images required by the user by using the retrieval keywords based on the image-text database, and the images are then output to the user.

According to an embodiment of the invention, the image-text database is obtained by adding image metadata based on the preset deep learning network, specifically including:
performing deep learning on the image based on the preset deep learning network, and acquiring a target data segment and an image optical feature vector database by combining the image metadata, where the target data segment includes image scene description, plot description and action semantics described in characters; and
obtaining the image-text database based on the target data segment and the image optical feature vector database, and establishing mapping relationship of an image format.

It should be noted that, in this embodiment, deep learning is performed on the image metadata, image scene description, plot description and action semantics related to the image content are stored as the target data segment, the image can be subjected to deep learning to obtain the image optical feature vector database, the image-text database is obtained based on the target data segment and the image optical feature vector database, and the mapping relationship of the image format is then established based on the image-text database, where only one format is preferably reserved when the image format is mapped, and the reserved format should be compatible with a conventional format.

According to an embodiment of the invention, the actively edited data in the preset editing area of the image metadata are acquired to perform encryption and/or read-only protection, and the active edited data are stored, specifically including:
acquiring the actively edited data based on the preset editing area corresponding to the image metadata, where the actively edited data is manually edited in advance and filled in the corresponding preset editing area; and
supplementing the semantic description and image feature expression, and performing encryption and/or read-only protection on the actively edited data, where the storage mode includes cloud offline download and/or local download.

It should be noted that, in this embodiment, there is a manual data editing area, that is, the preset editing area, in the image metadata, content of the manually edited data can be obtained by acquiring the actively edited data in the corresponding area, and the corresponding data content can be used to supplement the semantic description and the image feature expression after the actively edited data are acquired. Preferably, the actively edited data, after being acquired, protected by encryption or read-only protection, so as to prevent manually input data from being falsified, and the data can be stored by using cloud offline download or local download when the data are stored.

According to an embodiment of the invention, the preset model is supplemented to perform adversarial learning on the image metadata through connection between the web crawler and the public semantic database, so as to improve semantic description and image feature expression, specifically including:
supplementing the preset model to perform the adversarial learning on the image metadata through connection between the web crawler and the public semantic database, so as to provide the adversarial learning; and
improving the semantic description and the image feature expression according to the weight ratio after the adversarial learning, and associating a reference mark with the image metadata when a similarity index appears.

It should be noted that, in this embodiment, a passive monitoring addition mode is provided, specifically, a corresponding model is supplemented through connection between the web crawler and the public semantic database to relearn the images, the adversarial learning is provided, a learning model from the emotion semantics and some third-party perspectives are improved, and the semantic description and image feature expression are perfected according to weights. Further, the reference marker is associated as much as possible and stored locally when a similarity index appears, so that offline search and reference are facilitated. Because machine comprehension is based on texts, and human reasoning and emotional understanding are different in specific use, some explicit contrastive data sources need to be annotated for human understanding of generation logic therein, so that reference becomes more convenient, and retrieval cost of a user is reduced.

According to an embodiment of the invention, the method further includes obtaining an image-text database from video data, specifically including:
acquiring semantic data in a video based on the video data, where the semantic data includes self-contained semantics and emotion semantics;
collecting the information of semantic description from associated webpages and bullet screens when the video data is a video on a public website; and
acquiring image-text data corresponding to key frames of the video based on key frames of each video in combination with the information of semantic description to obtain the image-text database, where the image-text data includes text and images corresponding to the key frames of the video. The emotion semantics can be used for further subdividing some emotion descriptive limiting conditions to better distinguish different images and video clips.

It should be noted that, in this embodiment, the self-contained semantics and emotion semantics in the image can be collected and automatically classified first for the video data, and description information is collected from the associated webpages and bullet screens for the videos on the public website, where the description information is converted into key frame description and comment information after dehydration according to the caption time axis, audio key paragraph sampling, and the like, text and image summaries are extracted for a file, the time axis is simply obtained as progress, and identifiable text and images are extracted for each key frame, and semantic learning is performed to facilitate easy understanding of content of the file on a smart speaker, so that the user can later open the file independently by using a device with limited capabilities, which is similar to narration of a movie by segment and frame. Preferably, this function can help the blind turn any file with multimedia into a summary file with image interpretation through any device, and can also help some old devices open the file with limited software.

According to an embodiment of the invention, the method further includes: performing multimedia reading by using a preset reading device on the image-text data acquired from a video file.

It should be noted that, in this embodiment, the reading device, such as a multimedia reading module, can perform multimedia reading and playing tasks (such as text, image and file), according to the image-text data, and the voice reading and playing function is used to generate audio. Preferably, the reading part mainly selects description content integrated with various sources (optical features corresponding to the images, and third-party comments, the video content should be found based on the summary of image content when the description content comes from a video) of adversarial learning, or navigation information is generated for promoting to jump to professional commentary content associated some third parties.

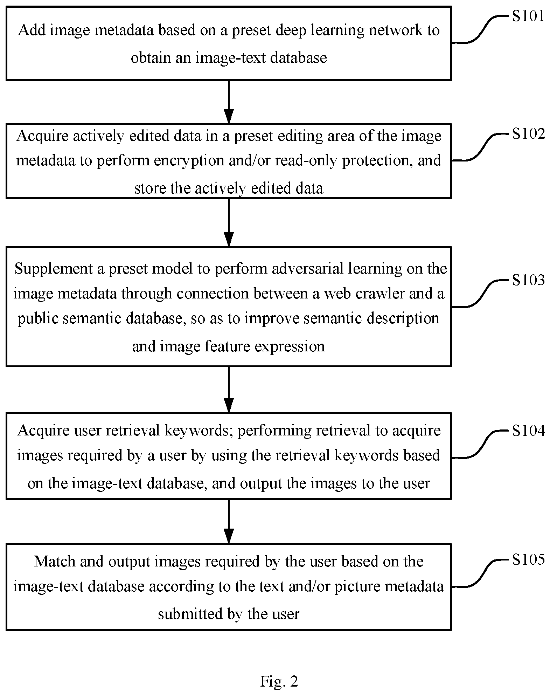

Further, in another embodiment of the invention, as shown in Fig. 2, the method further includes step S105, matching and outputting images required by the user based on the image-text database according to the text and/or picture metadata submitted by the user.

It should be noted that, after steps S101-S104, step S105 can be introduced, where in the step S105, search is performed according to texts and/or images submitted by the user, images corresponding to an image matched abstract in the image-text database are identified as images required by the user.

For this type of images, temporary data feature extraction and learning can be performed. When public images are involved, image search frequency is marked according to sufficient search of public data, and when a high-frequency search threshold is reached, a multi-source knowledge graph of the image-text database is established, where the high-frequency search threshold is artificially set, and a threshold parameter can be modified as needed in an actual operation process; and the corresponding search frequency can be used as a trigger condition for enhancing the depth understanding of some hotspot image data.

It is worth mentioning that the user retrieval keywords are acquired, retrieval is performed based on the image-text database to acquire images required by a user by using the retrieval keywords, and the images are the output to the user, specifically including:
avoiding privacy data, and acquiring the retrieval keywords based on the search content of the user; and
matching the image-text database based on the retrieval keywords to obtain the images required by the user.

It should be noted that, in this embodiment, the step of "avoiding privacy data" includes erasing privacy information such as name and stature when the semantic content (that is, the user's search content) are uploaded, and uploading the optical feature vector data for decomposition and comparison, for example, only proportion information is retained for a specific height, and no absolute numerical value is stored; not all portrait data are handed over to a server for comparison at a time, end-to-end encryption is supported for the data, progressive fuzzy search of the abstract information replaces matching retrieval of all the data, and when all the data needed to be uploaded for matching, the user consent should be obtained to ensured that the server uses public data and user-authorized data.

It is worth mentioning that the method further includes: generating a multimedia preview file by using a preset preview module.

It should be noted that, in this embodiment, the method further includes: receiving a preview request by using the preset preview module to generate the preview file corresponding to the new multimedia file that combines images and text.

It is worth mentioning that the method further includes: reporting the data to a cloud platform for query.

It should be noted that, in this embodiment, after the image-text database is obtained, the corresponding data are reported to the cloud platform, so that when the query is performed, local computing power and cloud computing power are in reasonable collaboration by integrating the offline computing power and the cloud computing power in real time, and offline data are overwritten with real-time data to save storage space.

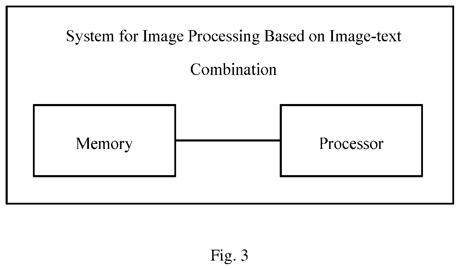

Fig. 3 is a block diagram of a system for image processing based on the image-text combination according to the invention.

As shown in Fig. 3, the invention discloses a system for image processing based on the image-text combination, including a memory and a processor, where the memory includes a program of a method for image processing based on the image-text combination, and when being executed by the processor, the program of a method implements the following steps:
adding image metadata based on a preset deep learning network to obtain an image-text database, where processing of the image metadata further includes:
acquiring actively edited data in a preset editing area of the image metadata to perform encryption and/or read-only protection, and storing the actively edited data;
supplementing a preset model to perform adversarial learning on the image metadata through connection between a web crawler and a public semantic database, so as to improve semantic description and image feature expression; and
acquiring user retrieval keywords, performing retrieval to acquire images required by a user by using the retrieval keywords based on the image-text database, and outputting the images to the user.

It should be noted that, in this embodiment, when performing deep learning on an image based on the preset deep learning network, the image metadata are added to obtain the image-text database, where the added image metadata need to be processed in advance, and the processing method includes: acquiring actively edited data in a preset editing area of the image metadata to perform encryption and/or read-only protection , storing the actively edited data and supplementing a preset model to perform adversarial learning on the image metadata through connection between a web crawler and a public semantic database, so as to improve semantic description and image feature expression.

Further, two steps are utilized in the process of processing the image metadata, where the first step is manual editing and modification, and the semantic description and image feature expression are supplemented by acquiring the manually modified actively edited data; and the second step is automatic generation of deep learning, which supplements emotion semantics, action semantics, still life semantics, and the like, and makes the image feature expression by collecting webpage information or data of similar images in a public domain through the web crawler, the user retrieval keywords are acquired after the text-image database is acquired, the retrieval is performed to acquire images required by the user by using the retrieval keywords based on the image-text database, and the images are then output to the user.

The image-text database is obtained by adding image metadata based on the preset deep learning network, specifically including:
performing deep learning on the image based on the preset deep learning network, and acquiring a target data segment and an image optical feature vector database by combining the image metadata, where the target data segment includes image scene description, plot description and action semantics described in characters; and
obtaining the image-text database based on the target data segment and the image optical feature vector database, and establishing mapping relationship of an image format.

It should be noted that, in this embodiment, deep learning is performed on the image metadata, image scene description, plot description and action semantics related to the image content are stored as the target data segment, the image can be subjected to deep learning to obtain the image optical feature vector database, the image-text database is obtained based on the target data segment and the image optical feature vector database, and the mapping relationship of the image format is then established based on the image-text database, where only one format is preferably reserved when the image format is mapped, and the reserved format should be compatible with a conventional format.

According to an embodiment of the invention, the actively edited data in the preset editing area of the image metadata are acquired to perform encryption and/or read-only protection, and the active edited data are stored, specifically including:
acquiring the actively edited data based on the preset editing area corresponding to the image metadata, where the actively edited data is manually edited in advance and filled in the corresponding preset editing area; and
supplementing the semantic description and image feature expression, and performing encryption and/or read-only protection on the actively edited data, where the storage mode includes cloud offline download and/or local download.

It should be noted that, in this embodiment, there is a manual data editing area, that is, the preset editing area, in the image metadata, content of the manually edited data can be obtained by acquiring the actively edited data in the corresponding area, and the corresponding data content can be used to supplement the semantic description and the image feature expression after the actively edited data are acquired. Preferably, the actively edited data, after being acquired, protected by encryption or read-only protection, so as to prevent manually input data from being falsified, and the data can be stored by using cloud offline download or local download when the data are stored.

According to an embodiment of the invention, the preset model is supplemented to perform adversarial learning on the image metadata through connection between the web crawler and the public semantic database, so as to improve semantic description and image feature expression, specifically including:
supplementing the preset model to perform the adversarial learning on the image metadata through connection between the web crawler and the public semantic database, so as to provide the adversarial learning; and
improving the semantic description and the image feature expression according to the weight ratio after the adversarial learning, and associating a reference mark with the image metadata when a similarity index appears.

It should be noted that, in this embodiment, a passive monitoring addition mode is provided, specifically, a corresponding model is supplemented through connection between the web crawler and the public semantic database to relearn the images, the adversarial learning is provided, a learning model from the emotion semantics and some third-party perspectives are improved, and the semantic description and image feature expression are perfected according to weights. Further, the reference marker is associated as much as possible and stored locally when a similarity index appears, so that offline search and reference are facilitated. Because machine comprehension is based on texts, and human reasoning and emotional understanding are different in specific use, some explicit contrastive data sources need to be annotated for human understanding of generation logic therein, so that reference becomes more convenient, and retrieval cost of a user is reduced.

According to an embodiment of the invention, the method further includes obtaining an image-text database from video data, specifically including:
acquiring semantic data in a video based on the video data, where the semantic data includes self-contained semantics and emotion semantics;
collecting the information of semantic description from associated webpages and bullet screens when the video data is a video on a public website; and
acquiring image-text data corresponding to key frames of the video based on key frames of each video in combination with the information of semantic description to obtain the image-text database, where the image-text data includes text and images corresponding to the key frames of the video. The emotion semantics can be used for further subdividing some emotion descriptive limiting conditions to better distinguish different images and video clips.

It should be noted that, in this embodiment, the self-contained semantics and emotion semantics in the image can be collected and automatically classified first for the video data, and description information is collected from the associated webpages and bullet screens for the videos on the public website, where the description information is converted into key frame description and comment information after dehydration according to the caption time axis, audio key paragraph sampling, and the like, text and image summaries are extracted for a file, the time axis is simply obtained as progress, and identifiable text and images are extracted for each key frame, and semantic learning is performed to facilitate easy understanding of content of the file on a smart speaker, so that the user can later open the file independently by using a device with limited capabilities, which is similar to narration of a movie by segment and frame. Preferably, this function can help the blind turn any file with multimedia into a summary file with image interpretation through any device, and can also help some old devices open the file with limited software.

According to an embodiment of the invention, the method further includes: performing multimedia reading by using a preset reading device on the image-text data acquired from a video file.

It should be noted that, in this embodiment, the reading device, such as a multimedia reading module, can perform multimedia reading and playing tasks (such as text, image and file), according to the image-text data, and the voice reading and playing function is used to generate audio. Preferably, the reading part mainly selects description content integrated with various sources (optical features corresponding to the images, and third-party comments, the video content should be found based on the summary of image content when the description content comes from a video) of adversarial learning, or navigation information is generated for promoting to jump to professional commentary content associated some third parties.

Further, in another embodiment of the invention, as shown in Fig. 2, the method further includes step S105, matching and outputting images required by the user based on the image-text database according to the text and/or picture metadata submitted by the user.

It should be noted that, after steps S101-S104, step S105 can be introduced, where in the step S105, search is performed according to texts and/or images submitted by the user, images corresponding to an image matched abstract in the image-text database are identified as images required by the user. For this type of images, temporary data feature extraction and learning can be performed. When public images are involved, image search frequency is marked according to sufficient search of public data, and when a high-frequency search threshold is reached, a multi-source knowledge graph of the image-text database is established, where the high-frequency search threshold is artificially set, and a threshold parameter can be modified as needed in an actual operation process; and the corresponding search frequency can be used as a trigger condition for enhancing the depth understanding of some hotspot image data.

It is worth mentioning that the user retrieval keywords are acquired, retrieval is performed based on the image-text database to acquire images required by a user by using the retrieval keywords, and the images are the output to the user, specifically including:
avoiding privacy data, and acquiring the retrieval keywords based on the search content of the user; and
matching the image-text database based on the retrieval keywords to obtain the images required by the user.

It should be noted that, in this embodiment, the step of "avoiding privacy data" includes erasing privacy information such as name and stature when the semantic content (i.e., the user's search content) are uploaded, and uploading the optical feature vector data for decomposition and comparison, for example, only proportion information is retained for a specific height, and no absolute numerical value is stored; not all portrait data are handed over to a server for comparison at a time, end-to-end encryption is supported for the data, progressive fuzzy search of the abstract information replaces matching retrieval of all the data, and when all the data needed to be uploaded for matching, the user consent should be obtained to ensured that the server uses public data and user-authorized data.

It is worth mentioning that the method further includes: generating a multimedia preview file by using a preset preview module.

It should be noted that, in this embodiment, the method further includes: receiving a preview request by using the preset preview module to generate the preview file corresponding to the new multimedia file that combines images and text.

It is worth mentioning that the method further includes: reporting the data to a cloud platform for query.

It should be noted that, in this embodiment, after the image-text database is obtained, the corresponding data are reported to the cloud platform, so that when the query is performed, local computing power and cloud computing power are in reasonable collaboration by integrating the offline computing power and the cloud computing power in real time, and offline data are thus overwritten with real-time data to save storage space.

A third aspect of the invention provides a computer-readable storage medium, where the computer-readable storage medium includes program of a method for image processing based on the image-text combination, and when being executed by the processor, the program of a method implements the steps of the method for image processing based on the image-text combination as described in any one of the above.

A method, a system and a readable storage medium for image processing based on the image-text combination disclosed in the invention can process deeper retrieval of videos and images, and solve computational problems of generation of mass data and retrieval by many users, helping the users check content of the corresponding image files; further, the invention gives full play to deep learning functions of each smart device and cloud computing, simultaneously converts a new data format and downloads the same to the local device adaptation, sends files of which the summary information has been previewed to an old storage device, and enables the storage device to work independently after the collaboration is finished, so that the images can be retrieved by conventional search engines or small text search engines, thereby featuring strong adaptability.

In several embodiments provided in the invention, it should be understood that the disclosed device and method can be implemented in other ways. The device embodiments described above are merely illustrative, for example, the division of the units is only a logical function division, there may be additional divisions in actual implementation, for example, multiple units or components may be combined or integrated into another system, or some features may be ignored, or not implemented. In addition, the mutual coupling or direct coupling or communication connection between the components shown or discussed may be an indirect coupling or communication connection through some interface, device or unit, and may be electrical, mechanical or otherwise.

The units described as separate components may or may not be physically separated, and the components displayed as units may or may not be physical units, that is, may be located in one place, or may be distributed to multiple network units; some or all of the units may be selected according to actual needs to achieve the purpose of the solution of the embodiment.

In addition, all functional units in each embodiment of the invention may be integrated into one processing unit, or each unit may exist physically separately, or two or more units may be integrated into one unit; the above integrated units can be implemented in the form of hardware, or in the form of hardware plus software functional units.

It can be understood by those skilled in the art that the above that all or part of the steps of the above embodiments of the method can be accomplished by the hardware related to program instructions, the above programs can be stored in a computer-readable storage medium, and when the programs are executed, the steps included in the above method embodiments are performed. The aforesaid storage medium includes various medium capable of storing program codes, such as a mobile storage device, a read-only memory (ROM), a random access memory (RAM), a magnetic disk or an optical disk.

Alternatively, if the integrated unit is implemented in the form of software functional modules, and sold or used as an independent product, it can be stored in a computer-readable storage medium. Based on such understanding, the technical solution of the invention, in essence or from the view of part contributing to the prior art, or part of the technical solution, can be embodied in the form of software products, and the computer software product that is stored in a storage medium and includes several instructions configured to make one computer device (which can be a personal computer, a server, a network device, and the like) execute all or part of the steps of the method in each embodiment of the invention. The foregoing storage medium includes various medium capable of storing program codes, such as a mobile storage device, a ROM, a RAM, a magnetic disk or an optical disk.

## Claims

1. A method for image processing based on the image-text combination, comprising the following steps:
adding image metadata based on a preset deep learning network to obtain an image-text database, wherein processing of the image metadata further comprises:
acquiring actively edited data in a preset editing area of the image metadata to perform encryption and/or read-only protection, and storing the actively edited data;
supplementing a preset model to perform adversarial learning on the image metadata through connection between a web crawler and a public semantic database, so as to improve semantic description and image feature expression; and
acquiring user retrieval keywords, performing retrieval to acquire images required by a user by using the retrieval keywords based on the image-text database, and outputting the images to the user; wherein
the image-text database is obtained by adding image metadata based on the preset deep learning network, specifically comprising:
performing deep learning on the image based on the preset deep learning network, and acquiring a target data segment and an image optical feature vector database by combining the image metadata, wherein the target data segment comprises image scene description, plot description and action semantics described in characters; and
obtaining the image-text database based on the target data segment and the image optical feature vector database, and establishing mapping relationship of an image format, wherein
the preset model is supplemented to perform adversarial learning on the image metadata through connection between the web crawler and the public semantic database, so as to improve semantic description and image feature expression, specifically comprising:
supplementing the preset model to perform the adversarial learning on the image metadata through connection between the web crawler and the public semantic database, so as to provide the adversarial learning; and
improving the semantic description and the image feature expression according to the weight ratio after the adversarial learning, and associating a reference mark with the image metadata when a similarity index appears.

2. The method for image processing based on the image-text combination according to claim 1, wherein the actively edited data in the preset editing area of the image metadata are acquired to perform encryption and/or read-only protection, and the active edited data are stored, specifically comprising:
acquiring the actively edited data based on the preset editing area corresponding to the image metadata, wherein the actively edited data is manually edited in advance and filled in the corresponding preset editing area; and
supplementing the semantic description and image feature expression, and performing encryption and/or read-only protection on the actively edited data, wherein the storage mode comprises cloud offline download and/or local download.

3. The method for image processing based on the image-text combination according to claim 1, wherein the method further comprises obtaining an image-text database from video data, specifically comprising:
acquiring semantic data in a video based on the video data, wherein the semantic data comprises self-contained semantics and emotion semantics;
collecting the information of semantic description from associated webpages and bullet screens when the video data is a video on a public website; and
acquiring image-text data corresponding to key frames of the video based on key frames of each video in combination with the information of semantic description to obtain the image-text database, wherein the image-text data comprises text and images corresponding to the key frames of the video.

4. The method for image processing based on the image-text combination according to claim 3, wherein the method further comprises: performing multimedia reading by using a preset reading device on the image-text data acquired from a video file.

5. A system for image processing based on the image-text combination, comprising a memory and a processor, wherein the memory comprises a program of a method for image processing based on the image-text combination, and when being executed by the processor, the program of a method implements the following steps:
adding image metadata based on a preset deep learning network to obtain an image-text database, wherein processing of the image metadata further comprises:
acquiring actively edited data in a preset editing area of the image metadata to perform encryption and/or read-only protection, and storing the actively edited data;
supplementing a preset model to perform adversarial learning on the image metadata through connection between a web crawler and a public semantic database, so as to improve semantic description and image feature expression; and
acquiring user retrieval keywords, performing retrieval to acquire images required by a user by using the retrieval keywords based on the image-text database, and outputting the images to the user; wherein
the image-text database is obtained by adding image metadata based on the preset deep learning network, specifically comprising:
performing deep learning on the image based on the preset deep learning network, and acquiring a target data segment and an image optical feature vector database by combining the image metadata, wherein the target data segment comprises image scene description, plot description and action semantics described in characters; and
obtaining the image-text database based on the target data segment and the image optical feature vector database, and establishing mapping relationship of an image format, wherein
the preset model is supplemented to perform adversarial learning on the image metadata through connection between the web crawler and the public semantic database, so as to improve semantic description and image feature expression, specifically comprising:
supplementing the preset model to perform the adversarial learning on the image metadata through connection between the web crawler and the public semantic database, so as to provide the adversarial learning; and
improving the semantic description and the image feature expression according to the weight ratio after the adversarial learning, and associating a reference mark with the image metadata when a similarity index appears.

6. The system for image processing based on the image-text combination according to claim 5, wherein the actively edited data in the preset editing area of the image metadata are acquired to perform encryption and/or read-only protection, and the active edited data are stored, specifically comprising:
acquiring the actively edited data based on the preset editing area corresponding to the image metadata, wherein the actively edited data is manually edited in advance and filled in the corresponding preset editing area; and
supplementing the semantic description and image feature expression, and performing encryption and/or read-only protection on the actively edited data, wherein the storage mode comprises cloud offline download and/or local download.

7. A computer-readable storage medium, wherein the computer-readable storage medium comprises a program of a method for image processing based on the image-text combination, and when being executed by the processor, the program of a method implements the steps of the method for image processing based on the image-text combination according to any one of claims 1-4.
